# EUROPEAN PATENT APPLICATION

(11) **EP 1 592 199 A1**
(43) Date of publication of application: **02.11.2005**
(21) Application number: 05103426.2
(22) Date of filing: 27.04.2005
(51) Int. Cl.: H04L 29/06, H04L 12/26

(54) **Administration of network security**

(30) Priority: 30.04.2004 GB 0409667
(71) Applicant: Hewlett-Packard Development Company, L.P., Houston, TX 77070 (US)
(72) Inventor: Williamson, Matthew Murray, 94303, California (US); Zaba, Stefek Malkowski, BS34 8QZ, Bristol (GB); Dalton, Christopher I, BS34 8QZ, Bristol (GB); Griffin, Jonathan, BS34 8QZ, Bristol (GB)
(74) Representative: Jones, Bruce Graeme Roland

(57) **Abstract**

A method of administering a network comprises the steps of: detecting the occurrence of a triggering event alerting an administrator to the presence of a user entity on the network, the triggering event being selected from the group consisting of: (i) allocation of a network address to the user entity; (ii) alteration of the user entity's network address; (iii) an action by the user entity causing resolution between a network address and an identifier; (iv) association of the user entity's network address and an identifier. Upon detecting such an event, the user entity having the network address is scanned for vulnerabilities by sending at least one outward packet to it, for example seeking to establish a connection on a particular port, and the response, if any, is then used to determine whether is vulnerable to known malicious code.

## Description

### BACKGROUND TO THE INVENTION

### 1. FIELD OF THE INVENTION

The present invention relates to the administration of a network of interconnected computers.

In a network environment virtually any processing entity (or "host") is at one time or another connected to one or more other hosts. Thus for example in the case of an IT environment, a host in the form of a computer (such as a client, a server, a router, or even a printer for example) is frequently connected to one or more other computers, whether within an intranet of a commercial organization, or as part of the Internet. Alternatively, in the case of a communications technology environment, a host in the form of a mobile telephone is, merely by virtue of its intrinsic purpose, going to be connected to one or more other hosts from time to time. An inevitable result is that the opportunities for the propagation of 'malicious' code (such as viruses or worms) which may cause deleterious effects to the network is enhanced as a result.

Within the context of this specification malicious code is data which is assimilable by a host that may cause a deleterious effect upon the performance of either: the aforesaid host; one or more other hosts; or a network of which any of the above-mentioned hosts are a part. A characteristic effect of such code is that it propagates either through self-propagation or through human interaction. Thus for example, code may act by becoming assimilated within a first host, and subsequent to its assimilation may then cause deleterious effects within that first host, such as corruption and/or deletion of files (this type of code is normally known as a virus). In addition the code may cause self-propagation to one or more further hosts at which it will then cause similar corruption/deletion and further self-propagation. Alternatively the code may merely be assimilated within the first host and cause no deleterious effects whatsoever, until it is propagated to one or more further hosts where it may then cause such deleterious effects, such as, for example, corruption and/or deletion of files. In yet a further alternative scenario, code may for example become assimilated within a first host, and then cause itself to be propagated to multiple other hosts within the network. The code may have no deleterious effect upon any of the hosts by whom it is assimilated, however the self-propagation through the network per se may be of a sufficient magnitude to have a negative effect on the speed of "genuine" network traffic, so that the performance of the network is nonetheless affected in a deleterious manner (this type of code is normally known as a worm). The three examples given above are intended for illustration of the breadth of the term code, and are not intended to be regarded in any way as exclusively definitive.

### 2. DESCRIPTION OF RELATED ART

Once a vulnerability of an operating system (for example) becomes known to its the developers, they typically rapidly take remedial action and develop a 'patch' to be installed which has the effect of removing the vulnerability (to malicious code which may be written to exploit it). Such patches are typically then made widely available to network administrators to install on vulnerable hosts. One manner in which the potential vulnerability of a host may be established is by downloading and running, on a user host, a script which checks that all the appropriate patches are installed; the downloading and running of such a script is initiated automatically upon authentication by a user of their credentials.

### SUMMARY OF THE INVENTION

An aspect of the invention lies in an appreciation of the fact that, in a large proportion of cases of infection by malicious code, the existence and nature of the vulnerabilities which such malicious code exploits is known to network administrators, and preventative measures are readily available and easily implementable to remove the vulnerabilities. In such circumstances, a large proportion of the instances of infection occur as a result of one of two phenomenon: firstly failure to implement the appropriate preventative measure on one or more computing entities within the infected network; and secondly the performance by users within the network of an unauthorised action, such, for example, as the downloading and installation of software on to a host in the network, which software has the effect of damaging the integrity of the host's ability to withstand infection (one example of this may be the unwitting installation of a code known in the art as a trojan - a security-breaking program that is disguised as something benign, such as a game).

An aspect of the present invention provides a method of administering a network having an administrative infrastructure, and a user computing entity, the method comprising the steps of:
detecting occurrence of the dispatch of a networking address from the user entity;
upon detection, sending at least one outward packet to the user entity's network address; and
determining, on the basis of packets received (if any) from the user entity, whether the user entity is vulnerable.

Typically the occurrence of dispatch of a networking address can be detected by the occurrence of one or more 'signature' events indicative of such dispatch, for:
(i) allocation of a network address to the user entity;
(ii) request by the user entity for resolution between a network address and a resource identifier;
(ii) request by the user identity for association of a network address with a physical address.

### BRIEF DESCRIPTION OF DRAWINGS

Fig. 1 is a schematic illustration of a network and a plurality of user computing entities;
Fig. 2 is a flowchart illustrating operation of a program illustrated schematically in Fig. 1; and
Figs. 3 and 4 are further schematic illustrations of a network

### DESCRIPTION OF PREFERRED EMBODIMENTS

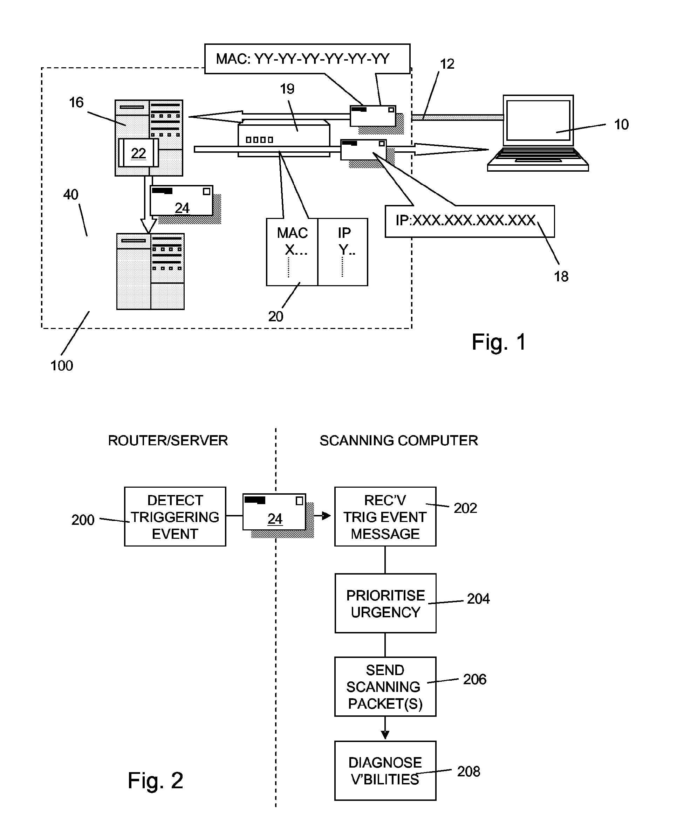

Referring now to the scenario illustrated in Fig. 1, a network 100 comprises a plurality of hosts, each of which in the present example is a computing entity. One such is a portable user computer 10, whose physical connection to the network 100 is established in the present example via a Local Area Network (LAN or 'ethernet') connection 12 (either cable or wireless), but any suitable connection could be used. Upon establishing a physical connection the user entity 10 then broadcasts a data packet 14 which contains the physical address 16 of its network card, known in the art as a Media Access Control (MAC) address (of the form yy-yy-yy-yy-yy-yy where y is a hexadecimal number). The MAC address is an identifier which is globally unique to a particular physical entity; no two computing entities have the same MAC address. Upon receipt of the data packet, a server 16, operating Dynamic Host Control Protocol (DHCP), returns an Internet Protocol (IP) address 18 (of the form xxx.xxx.xxx.xxx, where xxx is either zero or an integer less than 256) to the user entity 10. The data packets passing between the user entity 10 and server 16 will be routed by means of one or more routers. Upon receipt of the packet sent from the user entity, containing its MAC address, a router 19, proximate in the network to the user entity 10 stores the IP address and MAC address of the user entity 10 as a related pair in a memory, known as an Address Resolution Protocol (ARP) cache 20. The ARP cache enables identification of the particular physical computing entity from an IP address (and thus the transmission of messages addressed to the IP address to that physical entity). Transmission of a data packet to a user entity at a particular IP address will typically involve a series of resolutions between the IP address and MAC addresses of intermediate network computing entities involved in transmitting the packets, and each resolution is performed using an ARP cache within the entity performing the resolution. Both the DHCP server 16 and the router 19 are computing entities which may be thought of as forming part of the network infrastructure, that is to say they are computing entities whose primary purpose is the performance of network tasks such as the allocation of addresses and proper transmission and routing of packets.

Referring now additionally to Fig. 2, in which a flowchart illustrates in schematic form operations involved in an embodiment of the present invention, the DHCP server 16 is configured with a small program 22 whose function it is to detect the occurrence of a triggering event 200 which causes the initiation of a scan for vulnerabilities. The triggering event in question is the dispatch by a user entity 10 of one of its addresses which are used for networking purposes. This sending out of an address (of whatever kind) can occur in a variety of scenarios and for a variety of purposes, and in practice it is easier and more practical to detect the occurrence of events which take place in such scenarios, since they manifest a triggering event, rather than seeking to detect the event itself.

In the scenario described above the dispatch of an address from the user entity occurs in the course of the instance of the allocation of an IP address by the server 16, and so the program 22 is adapted to detect such an allocation. The dispatch of the address from the user entity, is detected in this instance by the allocation of an IP address, since this cannot occur without the dispatch of a MAC address from the user entity. Upon detection of a triggering event, the program 22 sends a message 24 to a scanning computer entity 40 indicating that allocation of an IP address has taken place, and identifying the IP address allocated, the MAC address of the user entity, and the time of allocation. Thus, in this example, where the detection takes place at a separate entity to the scanning computing entity 40, the scanning computing entity 40 can be thought of as detecting the dispatch of an address by virtue of receiving a message to that effect from the program 22. The message 24 is received at step 202 by the scanning computer 40, which then, at step 206, performs a series of investigative operations to establish whether the user entity 10 has any vulnerabilities which are known to the network administrator. Preferably, the message from the server 16 incorporates additional data, such as, for example: whether the user entity has connected to the network before and if so how long since the last connection was made; and for entities which have been connected previously, the length of time since the entity was last scanned for vulnerabilities. Where such additional data is provided, it enables the scanning computer to perform the preferred step 204, prior to step 206, of prioritising the urgency of the scanning operation to be performed on the user entity. Prioritisation can be advantageous but is not essential. Any prioritisation typically takes place in accordance with whatever policy an administrator may seek to implement. For example, a policy may provide that entities that have not been connected before, or not connected for a long time, or not been scanned for a long time having the highest priority for scanning, while manifestations of triggering events occurring in respect of user entities which have been scanned within a predetermined interval of time can be ignored. Either in the course of the scanning operation, or subsequently, any vulnerabilities of the user entity which has been scanned are then diagnosed at step 208.

It should be noted that, in the example described above, the scanning computer 40 is illustrated and described as a separate hardware entity. This is not necessary, provided that it is established as a computing entity which is capable of performing the function of cooperating with a program which detects the occurrence of the dispatch of an address from a user. Thus the scanning computer entity could equally be hosted on the server 16, for example, together with the detection program.
Equally, the detection program can, depending upon various architectural constraints, be incorporated into the scanning computing entity where desired.

In one embodiment of a scanning, the scanning computer 40 attempts to establish whether the user entity 10 has a known vulnerability present on some older, unremedied Microsoft Windows (TM) operating systems, which (unknown to many users) incorporated software automatically enabling such users to operate as a web server, but which, due to a flaw in its operation, also left the user entity on which the software was running vulnerable to attack by malicious code. The default existence of such a capacity (and its inherent, unwanted vulnerability) was exploited, for example, by the nimda and code red worms. In order to scan for this vulnerability, scanning computer 40 attempts to establish ('requests') a connection with the user entity 10. To do this the computer 40 sends a packet to the user entity 10 containing what may be thought of as a label indicating the application-level protocol in accordance with which the packet ought to be processed. This 'label' is known in the art as a 'port number', and in this example the port number specified by the scanning computer is 80, indicating that the packet is to be processed in accordance with Hyper-Text Transfer Protocol (HTTP) - the protocol prevalent on the worldwide web. In addition to a port number, the packet sent by the scanning computer contains data indicating that it is seeking to establish a connection (using HTTP) with the user entity 10 in a capacity as a web server. If the user entity replies in an appropriate manner to further the process of establishing a connection, such a reply is a manifestation of the presence of the IIS capability; an absence of any reply is accordingly indicative of the absence of this capability. A reply, indicative of the IIS capability, may also enable inference or deduction of the presence of the vulnerability associated with that capability (eg from the version of the operating system running), or alternatively, further packets may then be sent to investigate whether the associated vulnerability is present. Further examples of scanning operations include dispatching a packet attempting to establish a connection on port 22; the receipt of a return packet, regardless of whether a connection can be established, is indicative of the existence of a capability which runs on Linux operating systems known as secure shells (SSH), which has the capacity to provide a remote computing entity with administrative access to the user machine. Yet a further example is an attempt to connect to the user entity 10 using port 53, this being indicative of a protocol employed by Domain Name Service (DNS) servers, whose function it is to resolve URLs (eg www.bbc.co.uk) into an IP address (eg 192.168.0.1), reply to which is indicative that the user entity has such a capacity.

The scanning operations described above exemplify attempts to communicate with the user entity using a specified application level protocol, the presence of which is either directly or deductively indicative of the user entity's capacity (and thus vulnerability, since the two are often closely interlinked). This is but one example of a generic kind of scanning operation, in which the operations in question are often specifically aimed at establishing, directly, the existence of known vulnerabilities. In other kinds of scanning operation a more deductive approach may be required. Thus for example, in attempting to establish a connection using (in this instance, neither specifically using HTTP nor with the aim of establishing the user entity's capacity as a server) the scanning computer may record the time intervals which elapse between the various packets sent back from the user which are required, in accordance with the protocol employed, to establish the connection. The magnitude of these time intervals can, in certain instances, reveal the operating system employed by the user entity, and this information can, in turn, enable deduction or diagnosis of the presence (or likely presence) of various vulnerabilities.

Alternatively, in accordance with a more drastic approach, the scanning computer may dispatch benign worms or viruses which attempt to "break-in" to the user entity, and, once in, cause the user entity to return a message to the scanning computer 40 indicating that the user entity 10 is vulnerable. Such an operation is known per se.

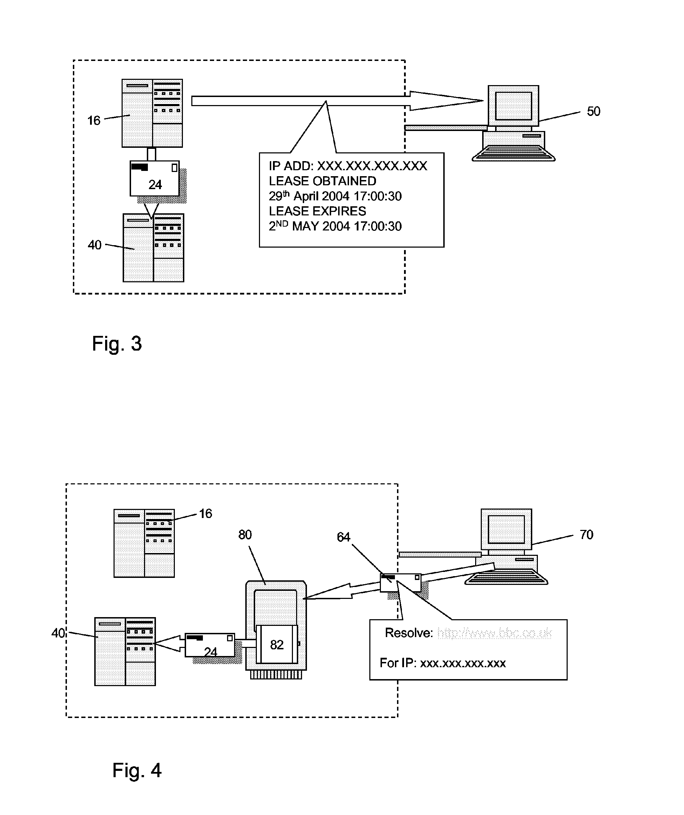

The triggering event described previously in connection with Fig. 1 was detected in the form of the allocation of an IP address to a user entity 10 being a laptop computer. A similar, but different instance of detecting a triggering event is illustrated in Fig. 3. A static, desktop user computer entity 50 has an IP address which has already been allocated. Typically IP addresses are allocated in conjunction with what is known as a lease for that IP address. The lease may typically last a number of days. Upon expiry of the lease, the desktop user entity must once again obtain an IP address. Typically the 'newly allocated' IP address will simply be the old IP address but with a renewed lease, whose expiry date is sometime in the future. Such an occurrence is treated in the present application as the allocation of an IP address, which just happens to be the same as the previous IP address.

Referring now to Fig. 4, a further manner of detecting a triggering event may take place in the case of a further desktop user computing entity 70. Desktop user entity 70 has its own fixed IP address, typically allocated to it by an operator, and so does not receive an IP address from the DHCP server 16. For the purposes of simplicity it will be assumed that the fixed IP address of desktop user entity 70 is not a duplicate of any other IP address in the network (were this assumption not true, it would not affect the principle illustrated). As a result of having a fixed IP address, desktop user entity 70 will neither seek nor be allocated an IP address from the DHCP server 16. If this entity is to be automatically to be subjected to a scan it is necessary to trigger the performance of a scan upon the occurrence of some other event than the allocation of an IP address. One such manifestation of a triggering event is a request 64 by the desktop user entity 70 to a Domain Name Server (DNS) 80, whose function it is to translate URLs into IP addresses. Thus, when an operator of desktop user entity 80 seeks, typically via the medium of a web browser program, connection to a web page identified by a character string (e.g. www.bbc.co.uk), the request for the web page is passed first to the DNS server 80, which resolves the URL into an IP address. It follows that, unless an operator knows the IP address for a website to which they wish to connect, the use of a DNS server 80 will be invoked whenever a request for a web page is made. The request 64 is one or more data packets identifying the URL for which resolution is sought, and the IP address of the user entity 70 requesting the resolution. The DNS server is configured with a small program 82, analogous to the program 22, which is adapted to recognise the request for the resolution of a URL as manifesting a triggering event in relation to the user of the IP address from which it was requested. The program 82 sends a message 84 upon detecting a triggering event to the scanning computer 40, which then operates to scan the desktop user entity 70 from which the request was made.

In connection with the use of the term 'request', it is to be noted that the term is intended to be interpreted to encompass any form of communication between two computing entities in which contact made by a first entity with a second entity either results in the performance of an operation by the second entity which is either specifically elicited by the communication, or which would, in accordance with proper execution of established protocols, normally occur as a consequence of receipt of the communication from the first entity. In such a scenario the operation performed by the second entity may be said to be 'requested'.

Yet a further manner of detecting a triggering event can be defined by a program (operating within the router 19 storing the ARP cache 20) as the pairing of an IP address with a MAC address in the ARP cache 20. Yet for a user entity such as desktop user entity 70, which may have been connected to the network for a long time and who's fixed IP address will therefore have been paired in an ARP cache with its MAC address for a corresponding period of time, the designation of such an event as manifesting a triggering event will still not trigger an automatic scan to take place. However, in a manner analogous the temporally limited lease on a dynamic IP address, an ARP cache can be configured to refresh its pairings at set time intervals (for example in order to expunge redundant pairings), and since renewal of a pairing essentially involves re-storing it, this nonetheless evidences a triggering event. Accordingly, a small program adapted to run on a router 19 can monitor the occurrence of a pairing of an IP address with a MAC address, including the renewal of a pairing as described above, and upon detecting such an event, send a message to the scanning computer entity 40.

In each of the examples described above, the scanning operation is performed by a program resident upon a distinct computing entity. This is a preferred network architecture, since it provides a high degree of flexibility and enables an existing network to be configured to operate in accordance with the present invention by configuring one entity to perform the scanning, and installing only small programs f(such as programs 22, 82 and 92, for example) on potentially large numbers of entities which form the network infrastructure. It is equally possible, however, for the scanning program to be installed in the computing entities in which, for example, the ARP cache and DNS servers are located, or for the network architecture to be a combination of dedicated scanning entities, and scanning programs running on other infrastructure elements.

The present invention has been exemplified using TCP, IP and ARP. The principles exemplified, of allocation, alteration (which arguably is re-allocation and therefore under the scope of allocation *simpliciter),* resolution of a network address operating to manifest the dispatch of an address and thereby to cause the automatic scanning of user entities are independent of the protocols employed.

## Claims

1. A method of administering a network having an administrative infrastructure, and a user computing entity, the method comprising the steps of:
detecting occurrence of the dispatch of a networking address from the user entity;
upon detection, sending at least one outward packet to the user entity's network address; and
determining, on the basis of packets received (if any) from the user entity, whether the user entity is vulnerable.

2. A method according to claim 1, wherein the dispatch of an address is manifested and detected by one of:
(i) allocation of a network address to the user entity;
(ii) an action by the user entity causing resolution between a network address and an resource identifier;
(iv) association of the user entity's network address and its physical address.

3. A method according to claim 2 wherein the resource identifier is a URL and the user entity's action causes resolution of a URL to an IP address, or vice versa.

4. A method according to claim 1 further comprising the step, upon occurrence of a triggering event, of dispatching a message to a scanning computing entity, from which the at least one packet is dispatched.

5. A method according to claim 1 wherein the physical address is a MAC address and the association between a network address and MAC address includes the storage of the user entity's MAC address and the network address of the user entity.

6. A method according to claim 1 wherein the allocation of a network address to a user entity is performed by a DHCP server.

7. A method according to claim 6 wherein the allocation of a network address to the user entity includes the step of renewing a lease of the user entity's existing network address.

8. A method according to claim 1 wherein the step of determining whether the user entity is vulnerable includes the step of determining whether a return packet is received within a predetermined time interval of sending the outward packet.

9. A method according to claim 8 wherein the step of determining whether the user entity is vulnerable includes the step of deducing, from whether a packet is received, the user entity's operating system.

10. A method according to claim 1 wherein the step of determining whether the user entity is vulnerable includes the step of establishing from a packet received, whether the user entity enables communication using an application protocol identified in the outward packet.

11. A method according to claim 1 wherein the outgoing packet includes benign code adapted to exploit a known vulnerability by causing a vulnerable user entity to dispatch a message indicating its vulnerability.

12. An administrative computing entity network having at least one user entity and a network infrastructure adapted to:
detect the occurrence of the dispatch of a networking address from the user entity;
upon detection, send at least one outward packet to the user entity's network address; and
determine, on the basis of packets received (if any) from the user entity, whether the user entity is vulnerable.

13. An administrative computing entity according to claim 12 adapted to detect:
an event selected from the group consisting of:
(i) allocation of a network address to the user entity;
(ii) an action by the user entity causing resolution between a network address and a resource identifier;
(iii) association of the user entity's network address and a physical address identifier;
as manifesting dispatch of an address by the user.

14. An entity according to claim 13 adapted, upon detection of a dispatch of an address, to send the at least one outward packet to the user entity and determine the user entity's vulnerability.

15. A network according to claim 11 wherein allocation of a network address is detected within a DHCP server.

16. A network according to claim 11 wherein the resolution between a network address and a resource identifier is detected in a DNS server.

17. A network according to claim 11 wherein the association between a network address and a physical address is detected in an ARP cache.

18. A computer program product adapted to detect the occurrence of the dispatch of a networking address from the user entity;
upon detection, send at least one outward packet to the user entity's network address; and
determine, on the basis of packets received (if any) from the user entity, whether the user entity is vulnerable.
